# EUROPÄISCHE PATENTSCHRIFT

(11) **EP 1 982 573 B1**
(45) Veröffentlichungstag und Bekanntmachung des Hinweises auf die Patenterteilung: **07.07.2010**
(21) Anmeldenummer: 08101037.3
(22) Anmeldetag: 29.01.2008
(51) Int. Cl.: A01F 29/09

(54) **Landwirtschaftliche Arbeitsmaschine**
Agricultural work machine
Machine de travail agricole

(30) Priorität: 19.04.2007 DE 102007018885
(43) Veröffentlichungstag der Anmeldung: 22.10.2008
(73) Patentinhaber: CLAAS Selbstfahrende Erntemaschinen GmbH, 33428 Harsewinkel (DE)
(72) Erfinder: Potthast, Arne, 37696, Marienmünster (DE)
(74) Vertreter: Ellerbrächter, Dirk

(56) Entgegenhaltungen:
- EP-A- 1 101 397
- DE-A1- 19 532 290
- DE-C2- 19 549 504
- DE-U1- 29 719 518

## Beschreibung

Die Erfindung betrifft einen Feldhäcksler nach dem Oberbegriff des Anspruchs 1, dessen Einzugsorgane das Erntegut einem Häckselaggregat zuführen und wobei dem Häckselaggregat eine zumindest zwei Gutdurchgangsspalte aufweisende Konditioniereinrichtung nachgeordnet ist.

Aus der DE 195 49 504 ist ein gattungsgemäßer Feldhäcksler bekannt geworden, dessen Häckselaggregat eine drei Nachzerkleinerungswalzen umfassende Konditioniereinrichtung nachgeordnet ist. Die Nachzerkleinerungswalzen sind so zueinander angeordnet, dass sich zwischen ihren Umfangsflächen zumindest zwei Gutdurchgangsspalte ausbilden, durch welche das von dem Häckselaggregat zerkleinerte Erntegut geführt wird. Damit die Nachzerkleinerungseinrichtung eine intensive Nachzerkleinerung des Erntegutes bewirkt, weisen alle Nachzerkleinerungswalzen unterschiedliche Umfangsgeschwindigkeiten auf, sodass die sich dabei ergebende Relativbewegung zwischen den in dem jeweiligen Durchgangsspalt benachbarten Nachzerkleinerungswalzen zu einem Reibeffekt auf dem Erntegut führt. Die Umfangsgeschwindigkeiten der Nachzerkleinerungswalzen sind so aufeinander abgestimmt, dass die untere Nachzerkleinerungswelze mit der niedrigsten Umfangsgeschwindigkeit betrieben wird während die ausgangsseitig angeordnete Nachzerkleinerungswalze mit der höchsten Umfangsgeschwindigkeit umläuft und die am Eingang der Konditioniereinrichtung angeordnete Konditionierwalze eine Umfangsgeschwindigkeit aufweist, die zwischen den Umfangsgeschwindigkeiten der übrigen Konditionierwalzen liegt. Eine solche Struktur hat einerseits wegen der sukzessiven Erhöhung der Umfangsgeschwindigkeit der oberen Konditionierwalzen den Vorteil, dass der Zerkleinerungseffekt allmählich gesteigert wird. Aufgrund dessen, dass die Spaltweite der Durchgangsspalte stets konstant ist, besteht bei einer derartigen Ausführung insbesondere das Problem, dass bei hohen Erntegutdurchsätzen ein Gutstau am ersten Durchgangsspalt auftreten kann, da die durch den konstanten Durchgangsspalt förderbare Erntegutmenge begrenzt ist. Zudem steigen bei hohen Erntegutdurchsätzen neben dem erforderlichen Energiebedarf zur Zerkleinerung die Belastungen der Zerkleinerungsorgane sprunghaft an.

Damit der jeweilige Durchgangsspalt in Abhängigkeit vom Erntegutdurchsatz änderbar ist, ist aus der DE 195 32 290 eine Ausführung bekannt geworden, deren Konditionierwalzen gegen die Wirkung eines Kraftspeichers, wie etwa einem Druckfederpaket, verschwenkbar gelagert sind. In Abhängigkeit von dem zu bewältigenden Erntegutdurchsatz werden die Konditionierwalzen gegen die Wirkung des Kraftspeichers durch den zu fördernden Erntegutstrom selbst verschwenkt, sodass sich schließlich ein größerer Durchgangsspalt ergibt. Aufgrund dessen, dass bei einer derartigen Ausführung die Änderung des Durchgangsspaltes ausschließlich von dem Verhältnis der vom Erntegutdurchsatz auf die Konditionierwalzen wirkenden Kräfte und der Gegenkraft des Kraftspeichers abhängt, ist es nur eingeschränkt möglich, das Erntegut einem gezielten Zerkleinerungseffekt auszusetzen.

Es ist deshalb Aufgabe der Erfindung die beschriebenen Nachteile des Standes der Technik zu vermeiden und insbesondere eine Konditioniereinrichtung vorzuschlagen, die eine gezielte Beeinflussung des Zerkleinerungseffektes bei moderatem Energiebedarf und moderaten auf die Konditioniereinrichtung wirkenden Belastungen zulässt.

Diese Aufgabe wird erfindungsgemäß durch die kennzeichnenden Merkmale der Anspruchs 1 gelöst.

Indem die Spaltweite der zumindest zwei Durchgangsspalte in der Weise einstellbar ist, dass die Spaltweite des im Eintrittsbereich der Konditioniereinrichtung angeordneten Durchgangsspaltes größer als die Spaltweite eines in Gutflussrichtung nachgeordneten Durchgangsspaltes ist, wird sichergestellt, dass eine gezielte Beeinflussung des Zerkieinerungseffektes bei moderatem Energiebedarf und moderaten auf die Konditioniereinrichtung wirkenden Belastungen möglich wird.

In einer vorteilhaften Ausgestaltung der Erfindung kann die jeweilige Spaltweite in Stufen oder stufenlos eingestellt werden, sodass eine hochflexible Anpassung der Zerkleinerung des Erntegutstromes vorgenommen werden kann.

Indem in einer vorteilhaften Weiterbildung der Erfindung, die Spaltweiten des vorgeordneten und des nachgeordneten Durchgangsspaltes in einem festen Verhältnis zueinander einstellbar sind, wird es möglich, die Konditionierwalzen gemeinschaftlich mittels eines einzigen Verschwenk- und/oder Verschiebemechanismus in verschiedene Positionen zu bewegen.

Eine besonders effiziente und optimal an die spezifischen Gegebenheiten des jeweils bearbeiteten Erntegutes angepasste Gutzerkleinerung wird dann erreicht, wenn die Spaltweiten der Durchgangsspalte in Abhängigkeit von Ernetgutparametern und/oder dem Zerkleinerungsgrad des Erntegutes einstellbar sind. In diesem Zusammenhang ist es von besonderem Vorteil, wenn der Erntegutparameter die Erntegutart und/oder die Erntegutfeuchte und der Zerkleinerungsgrad die gewünschte Schnittlänge und/oder die Partikelgröße der Teilchen des Erntegutstromes umfassen.

Eine energieeffiziente Gutförderung und -umlenkung wird in einer vorteilhaften Weiterbildung der Erfindung dann erreicht, wenn die Konditioniereinrichtung in dem Auswurfkrümmer in Gutflussrichtung zwischen dem Häckselaggregat und einem Nachbeschleunigungsorgan positioniert ist und die Konditionierwalzen in einer Weise zueinander angeordnet sind, dass der fordere Durchgangsspalt in der Gutflussrichtung des in die Konditioniereinrichtung eintretenden Gutstromes liegt und der nachgeordnete Durchgangsspalt so angeordnet ist, dass der aus der Konditioniereinrichtung austretende Gutstrom in Richtung des Einstrittsspaltes des Nachbeschleunigungsorgans abgegeben wird.

Eine konstruktive einfach gestaltete und dennoch effizient zerkleinernde Konditioniereinrichtung ergibt sich dann, wenn die Konditioniereinrichtung als Dreiwalzenkonditionierer ausgeführt ist und eine Konditionierwalze unterhalb und die zwei weiteren Konditionierwalzen oberhalb des durch die Durchgangsspalte geförderten Erntegutstromes angeordnet sind.

Indem in einer vorteilhaften Ausgestaltung eines Dreiwalzenkonditionierers die unterhalb des Erntegutstromes angeordnete Konditionierwalze den größeren Walzendurchmesser aufweist und die oberhalb des Erntegutstromes angeordneten Konditionierwalzen einen gleichen aber kleineren Walzendurchmesser aufweisen wird sichergestellt, dass sich ein akzeptabler Kompromiss zwischen Intensität der Gutumlenkung in der Konditioniereinrichtung und der Anzahl der erforderlichen Durchgangsspalte ergibt.

Eine weitere Optimierung des Gutumlenkprozesses in der Konditioniereinrichtung kann dann erreicht werden, wenn in einer vorteilhaften Ausgestaltung der Erfindung die Konditioniereinrichtung paarweise angeordnete Konditionierwalzen umfasst und wobei sich jeweils zwischen den paarweise angeordneten Konditionierwalzen ein Durchgangsspalt ergibt.

Eine weitere Optimierung des Zerkleinerungsprozesses unter energetischen und Belastungsgesichtspunkten ergibt sich auch dann, wenn in einer vorteilhaften Weiterbildung der Erfindung die Konditioniereinrichtung als Vielwalzenkonditionierer ausgeführt ist und zumindest eine Konditionierwalze unterhalb und die Vielzahl weiterer Konditionierwalzen oberhalb des durch die Durchgangsspalte geförderten Erntegutstromes angeordnet sind. Dies ist insbesondere darauf zurückzuführen, dass bei einer solchen Ausgestaltung der Konditioniereinrichtung eine Vielzahl von Durchgangsspalten realisiert werden können, sodass der an dem jeweiligen Durchgangsspalt erforderliche Zerkleinerungseffet geringer und damit energetisch günstiger umsetzbar ist. In diesem Zusammenhang ist es auch von Vorteil, wenn die zumindest eine unterhalb des Erntegutstromes angeordnete Konditionierwalze und die Vielzahl oberhalb des Erntegutstromes angeordneten Konditionierwalzen zwischen sich Durchgangsspalte ausbilden und wobei die Durchgangsspalte eine vom Eintrittsbereich zum Austrittsbereich der Konditioniereinrichtung abnehmende Spaltweite aufweisen.

Eine hohe Flexibilität in der Einstellung der Spaltweiten der verschiedenen Durchgangsspalte ergibt sich in vorleilhafter Weiterbildung der Erfindung insbesondere dann, wenn entweder die oberhalb des Gutstromes angeordneten Konditionierwalzen oder die unterhalb des Gutstromes angeordneten Konditionierwalzen oder alle Konditionierwalzen in ihrer Position änderbar gelagert sind.

Der Zerkleinerungseffekt der Konditioniereinrichtung kann auch dadurch optimal auf die Bedingungen des zu bearbeitenden Erntegutes abgestimmt werden, dass die Änderung der Spaltweite des im Eintrittsbereich der Konditioniereinrichtung liegenden Durchgangsspaltes zwecks Einstellung der Grobzerkleinerung vom dem Betreiber des Feldhäckslers vorgenommen wird und die Änderung der Spaltweite des oder der nachgeordneten Durchgangsspalte zwecks Einstellung der Feinzerkleinerung in Abhängigkeit von dem sensierten Zerkleinerungsgrad vom Betreiber oder automatisch vorgenommen wird. Eine derartige Anpassung des Zerkleinerungseffektes wird insbesondere dann auf einfache Weise möglich, wenn der Zerkleinerungsgrad mittels einer Detektionseinrichtung im Auswurfkrümmer ermittelt wird.

Weitere vorteilhafte Ausgestaltungen sind Gegenstand weiterer Unteransprüche und werden nachfolgend an Hand in mehreren Figuren dargestellter Ausführungsbeispiele beschrieben, Es zeigen:
- Figur 1: eine schematische Seitenansicht eines Feldhäckslers mit erfindungsgemäßer Konditioniereinrichtung
- Figur 2: eine Detailansicht der erfindungsgemäßen Konditioniereinrichtung
- Figur 3: weitere Ausführungsformen der erfindungsgemäßen Konditioniereinrichtung

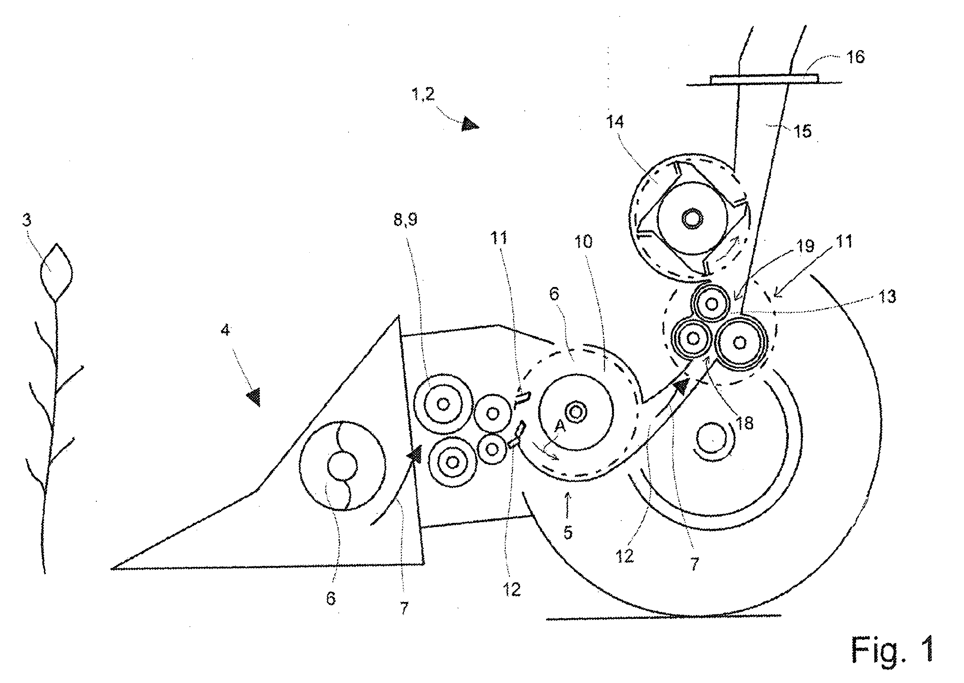

In Fig. 1 ist eine als selbstfahrender Feldhäcksler 2 ausgeführte landwirtschaftliche Arbeitsmaschine 1 abgebildet, der im frontseitigen Bereich zur Aufnahme von Erntegut 3 ein an sich bekanntes und deshalb nicht näher dargestelltes Vorsatzgerät 4 zugeordnet ist. In an sich bekannter Weise wird das aufgenommene Erntegut 3 mittels zumindest eines Querförderorgans 6 zu einem Erntegutstrom 7 zusammengeführt und an paarweise angeordnete als Einzugs- und Vorpresswalzen 8 ausgeführte Einzugsorgane 9 übergeben, die den Erntegutstrom 7 zunächst vorverdichten und schließlich in ihrem rückwärtigen Bereich an das Häckselaggregat 10 übergeben. Die umlaufenden Messer 11 des Häckselaggregats 10 zerkleinern im Zusammenwirken mit einer ortsfesten Gegenschneide 12 den Erntegutstrom 7 und übergeben ihn schließlich im rückwärtigen Bereich des Häckselaggregats 10 an eine noch näher zu beschreibende erfindungsgemäße Konditioniereinrichtung 13, wie etwa einen sogenannten Korncracker. Die Konditioniereinrichtung 13 übergibt schließlich in ihrem rückwärtigen Bereich den aus ihr austretenden Erntegutstrom 7 an einen Nachbeschleuniger 14 der die kinetische Energie des Erntegutstromes 7 so erhöht, dass der Erntegutstrom 7 einen obenseitig offenen Auswurfkrümmer 15 durchlaufen und aus diesem zur Übergabe an ein nicht dargestelltes Transportfahrzeug austreten kann.

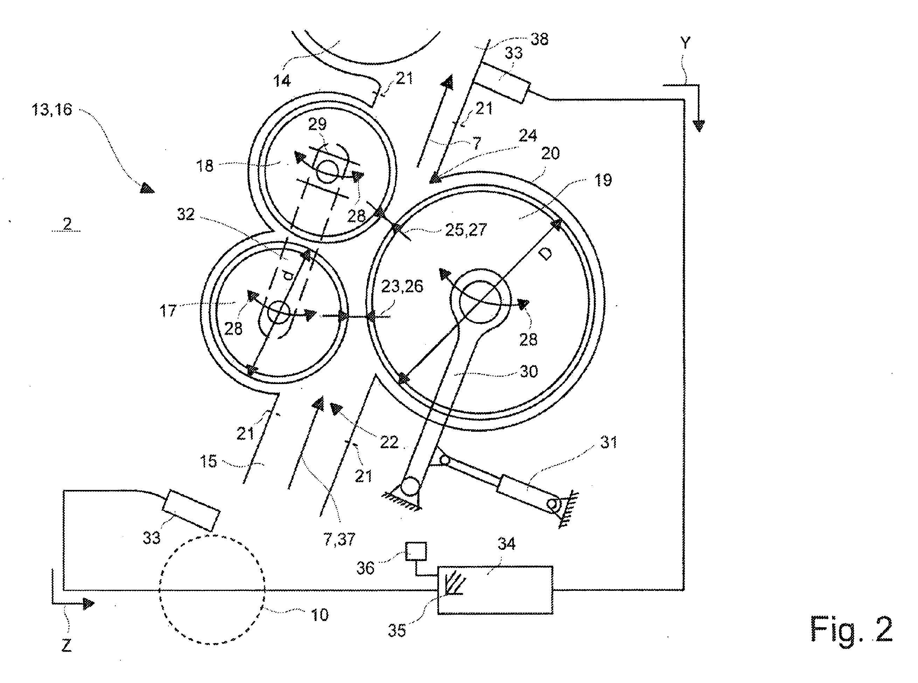

In Figur 2 ist nun die erfindungsgemäße Konditioniereinrichtung 13 im Detail beschrieben. Im dargestellten Ausführungsbeispiel ist die Konditioniereinrichtung 13 als sogenannter Dreiwalzencracker 16 ausgeführt. Die Konditionierwalzen 17, 18, 19 der Konditioniereinrichtung 13 sind in einem Walzengehäuse 20 drehbar gelagert, welches über nicht näher dargestellte Verbindungsmittel 21 in den Auswurfkrümmer 15 in einem Bereich zwischen dem Häckselaggregat 10 und dem Nachbeschleuniger 14 integriert werden kann. Die Konditionierwalzen 17-19 umfassen eine Konditionierwalze 19 großen Durchmessers D und zwei weitere Konditionierwalzen 17, 18 kleinen Durchmessers d, wobei die Konditionierwalzen 17-19 so in dem Walzengehäuse 20 angeordnet sind, dass die Konditionierwalze 19 großen Durchmessers D den die Konditioniereinrichtung 13 durchlaufenden Erntegutstrom 7 untenseitig begrenzt, während die beiden Konditionserwalzen 17, 18 kleinen Durchmessers d den Erntegutstrom 7 obenseitig begrenzen. Diese Art der Anordnung der Konditionierwalzen 17-19 zueinander führt zugleich dazu, dass sich zwischen den Konditionierwalzen 17-19 in erfindungsgemäßer Weise im Eintrittsbereich 22 der Konditioniereinrichtung 13 ein erster Durchgangsspalt 23 und im Austrittsbereich 24 der Konditioniereinrichtung 13 zumindest ein weiterer Durchgangsspalt 25 ausbildet Zugleich sind die Konditionierwalzen 13 so zueinander angeordnet, dass die Spaltweite 26 des im Eintrittsbereich 22 liegenden Durchgangsspaltes 23 stets größer ist als die Spaltweite 27 des im Austrittsbereich 24 liegenden Durchgangsspaltes 25. Auf dieses Weise wird zunächst sichergestellt dass die Zerkleinerung des Erntegutstromes 7 nur allmählich zunimmt, sodass neben der erforderlichen Zerkleinerungsenergie auch die von der Konditioniereinrichtung 13 zu bewältigenden Belastungen moderat ausfallen.

In einer vorteilhaften Ausgestaltung der Erfindung ist vorgesehen, dass die Konditionietwalzen 17-19 ihre Position zueinander ändern können. Im einfachsten Fall kann dies dadurch bewirkt werden, dass jede der Konditionierwalzen 17-19 gemäß den in Fig. 2 schematisch eingezeichneten Pfeilrichtungen 28 verschoben oder verschwenkt werden kann, sodass sich die jeweiligen Spaltweiten 26, 27 vergrößern oder verkleinern. Je nach dem, ob ein Verschieben und/oder Verschwenken der Konditionierwalzen 17-19 vorgesehen sein soll, können die Konditionierwalzen 17-19 in nicht näher dargestellten Schubgelenken 29 und/oder mittels Schwenkhebeln 30 schwenkbeweglich geführt sein. Abweichend von der in Fig.2 beispielhaft gewählten Darstellung könnte jede der Konditionierwalzen 17-19 entweder über Schwenkhebel 30 oder Schubgelenke 29 geführt werden, um eine Änderung der Spaltweite 26, 27 der Durchgangsspalte 23, 25 zu bewirken. Die jeweilige Schub- oder Schwenkbewegung kann dabei so ausgestaltet sein, dass die Konditionierwalzen 17-19 entweder in Stufen oder stufenlos in ihrer Position zueinander verändert werden können. In einer einfachen konstruktiven Umsetzung kann dies beispielsweise dadurch realisiert werden, dass die Konditionierwalzen 17-19 entweder in festgelegten Rastpositionen fixiert werden können oder mittels Stellzylindern 31 stufenlos in eine gewünschte Position beweg- und in dieser arretierbar sind.

Indem beispielsweise die Konditionierwalzen 17, 18 kleinen Durchmessers d über ein Koppelglied 32 miteinander verbunden sind und dieses Koppelglied 32 verschieb- oder verschwenkbar geführt wird, kann sichergestellt werden, dass sich bei Positionsänderung dieser Konditionierwalzen 17, 18 die Spaltweite 26, 27 der Durchgangsspalte 23, 25 in einem festen Verhältnis zueinander ändert. Aufgrund dessen, dass der Landwirt den Zerkleinerungsgrad häufig in Abhängigkeit von der Gutart und deren Eigenschaften ändern möchte, ist weiter vorgesehen, dass die Spaltweite 26, 27 der Durchgangsspalte 23, 25 in Abhängigkeit von Erntegutparametern, wie etwa der Erntegutart und/oder der Erntegutfeuchte, sowie einem gewünschten Zerkleinerungsgrad, etwa einer zu erreichenden Schnittlänge oder Partikelgröße, änderbar ist. In einer einfachen konstruktiven Ausgestaltung kann dies dadurch bewirkt werden, dass nicht näher dargestellte und an sich bekannte Gutstromdetektionseinrichtungen 33 vorgesehen sind, die Eigenschaften des Erntegutsromes 7, wie etwa die Partikelgröße und die Gutfeuchtigkeit sensieren können. Die generierten Gutfeuchtesignale Z und Zerkleinerungsgradsignale Y werden schließlich an eine Auswerteinheit 34 übermittelt, in der im einfachsten Fall Kennlinien 35 hinterlegt sind, die optimale Spaltweiten 26, 27 der Durchgangsspalte 23, 25 in Abhängigkeit vom Feuchtegehalt oder dem zu erzielenden Zerkleinerungsgrad des Erntegutstromes 7 definieren. Bezüglich des Zerkleinerungsgrades kann die Vorrichtung auch so beschaffen sein, dass der Betreiber des Feldhäckslers 2 über eine Eingabeeinrichtung 36 einen Zerkleinerungsgrad vorgibt und Auswerteinheit 34 über einen sogenannten Soll-lst-Wert-Vergleich den vorgegebenen Zerkleinerungsgrad mit dem von der der Konditioniereinrichtung 13 nachgeordneten Gutstromdetektionseinrichtung 33 ermittelten Zerkleinerungsgrad vergleicht und in Abhängigkeit von dem Ergebnis des Vergleichs automatisch eine Anpassung der Spaltweiten 26, 27 der Durchgangsspalte 23, 25 auslöst, ohne dass der Betreiber des Feldhäckslers 2 in diesen Anpassungsprozess aktiv eingebunden ist

In einer weiteren vorteilhaften Ausgestaltung der Erfindung ist die Konditioniereinrichtung 13 zudem so in den Auswurfkrümmer 15 integriert, dass der in ihrem Eintrittsbereich 22 liegende Durchgangsspalt 23 unmittelbar in Bewegungsrichtung 37 des in die Konditioniereinrichtung 13 eintretenden Erntegutstromes 7 liegt, während der im Austrittsbereich 24 liegende Durchgangsspalt 25 so positioniert ist, dass der durch ihn hindurchgeförderte Erntegutstrom 7 unmittelbar in Richtung des Eintrittsspaltes 38 des Nachbeschleunigungsorgans 14 abgegeben wird.

In dem beschriebenen Ausführungsbeispiel wird aufgrund der größeren Spaltweite 26 des im Eintrittsbereich 22 der Konditioniereinrichtung 13 liegenden Durchgangsspaltes 23 in diesem eine Grobzerkleinerung des Erntegutstromes 7 vorgenommen, während die geringere Spaltweite 27 des nachgeordneten Durchgangsspaltes 25 zu einer Feinzerkleinerung des Erntegutstromes 7 führt. In einer weiteren Ausgestaltung der Erfindung kann auch vorgesehen sein, dass die Änderung der Spaltweite 26 des forderen Durchgangsspaltes 23 zwecks Einstellung der Grobzerkleitierung vom dem Betreiber des Feldhäckslers 2 vorgenommen wird und die Änderung der Spaltweite 27 des nachgeordneten Durchgangsspaltes 25 zwecks Einstellung der Feinzerkleinerung in Abhängigkeit von dem sensierten Zerkleinerungsgrad vom Betreiber oder automatisch erfolgt.

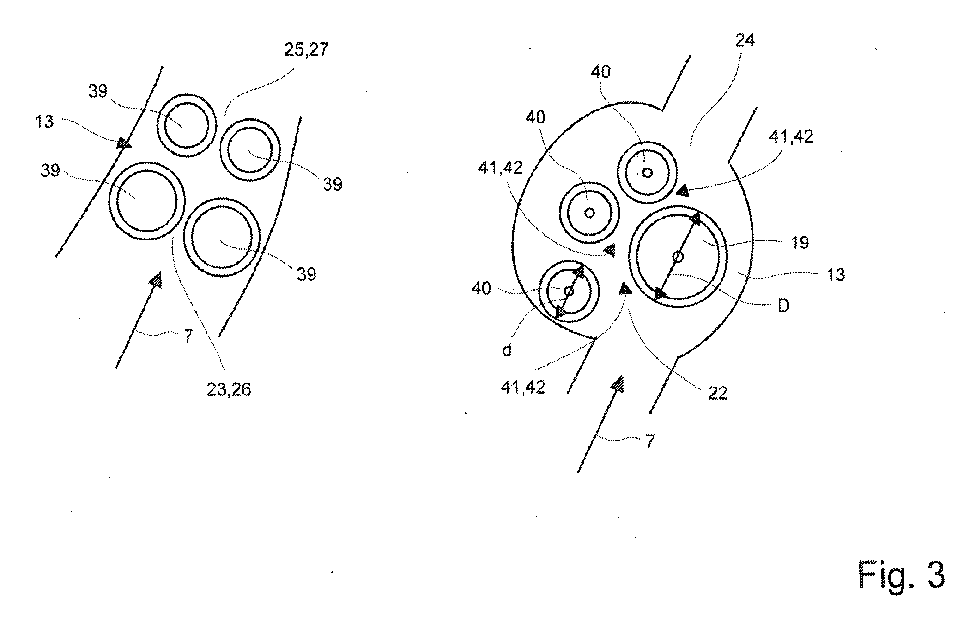

Es liegt im Rahmen der Erfindung, dass die beschriebene Konditioniereinrichtung 13 gemäß Fig. 3 paarweise angeordnete Konditionierwalzen 39 umfasst, sodass sich jeweils zwischen den paarweise angeordneten Konditionierwalzen 39 in analoger Weise die beschriebenen Durchgangsspalte 23, 25 unterschiedlicher Spaltweite 26, 27 ergeben. Auch liegt es gemäß Fig. 3 im Rahmen der Erfindung, dass einer einzigen Konditionierwalze 19 großen Durchmessers D eine Vielzahl von Konditionierwalzen 40 kleinen Durchmessers d zugeordnet sind, wobei sich dann eine Vielzahl von Durchgangsspalten 41 ergeben kann, die in erfindungsgemäßer Weise eine vom Eintrittsbereich 22 zum Austrittsbereich 24 abnehmende Spaltweite 42 aufweisen.

### Bezugszeichenliste:

| | | | |
|---|---|---|---|
| 1 | landwirtschaftliche Arbeitsmaschine | 31 | Stellzylinder |
| 2 | Feldhäcksler | 32 | Koppelglied |
| 3 | Erntegut | 33 | Gutstromdetektionseinrichtung |
| 4 | Vorsatzgerät | 34 | Auswerteinheit |
| 5 | | 35 | Kennlinie |
| 6 | Querförderorgan | 36 | Eingabeeinrichtung |
| 7 | Erntegutstrom | 37 | Bewegungsrichtung |
| 8 | Einzugs- und Vorpresswalzen | 38 | Eintrittsspalt |
| 9 | Einzugsorgan | 39 | Konditionierwalze |
| 10 | Häckselaggregat | 40 | Konditionierwalze |
| 11 | Messer | 41 | Durchgangsspalt |
| 12 | Gegenschneide | 42 | Spaltweite |
| 13 | Konditioniereinrichtung | | |
| 14 | Nachbeschleuniger | | |
| 15 | Auswurfkrümmer | D | großer Walzendurchmesser |
| 16 | Dreiwalzencracker | d | kleiner Walzendurchmesser |
| 17 | Konditionierwalze | Z | Gutfeuchtesignal |
| 18 | Konditionierwalze | Y | Zerkleinerungsgradsignal |
| 19 | Konditionierwalze | | |
| 20 | Walzengehäuse | | |
| 21 | Verbindungsmittel | | |
| 22 | Eintrittsbereich | | |
| 23 | Durchgangsspalt | | |
| 24 | Austrittsbereich | | |
| 25 | Durchgangsspalt | | |
| 26 | Spaltweite | | |
| 27 | Spaltweite | | |
| 28 | Pfeilrichtung | | |
| 29 | Schubgelenk | | |
| 30 | Schwenkgelenk | | |

## Patentansprüche

1. Feldhäcksler (2) mit das Häckselgut einem nachgeordneten Häckselaggregat (10) zuleitenden Einzugsorganen (9) und einem dem Häckselaggregat (10) nachgeordneten Auswurfkrümmer (15) sowie aus einer rotierend antreibbaren Walzenanordnung (17-19) bestehenden Konditioniereinrichtung (13) die zwischen dem Häckselaggregat (20) und dem Auswurfkrümmer (15) angeordnet ist und wobei die Konditionierwalzen (17-19) der Konditioniereinrichtung (13) zumindest zwei Gutdurchgangsspalte (23,25,41) ausbilden, **dadurch gekennzeichnet,**
**dass** die Spaltweite (26. 27, 42) der zumindest zwei Durchgangsspalte (23,25, 41) in der Weise einstellbar ist, dass die Spaltweite (26, 42) des im Eintrittsbereich (22) der Konditioniereinrichtung (13) angeordneten Durchgangsspaltes (23, 41) größer als die Spaltweite (27, 42) eines in Gutflussrichtung (37) nachgeordneten Durchgangsspaltes (25, 41) ist.

2. Feldhäcksler nach Anspruch 1,
**dadurch gekennzeichnet,**
**dass** die jeweilige Spaltweite (26, 27, 42) in Stufen oder stufenlos einstellbar ist.

3. Feldhäcksler nach einem der vorhergehenden Ansprüche,
**dadurch gekennzeichnet,**
**dass** die Spaltweiten (26, 27, 42) des vorgeordneten und des nachgeordneten Durchgangsspaltes (23, 25, 41) in einem festen Verhältnis zueinander einstellbar sind.

4. Feldhäcksler nach einem der vorhergehenden Ansprüche,
**dadurch gekennzeichnet,**
**dass** die Spaltweiten (26, 27, 42) der Durchgangsspalte (23, 25, 41) in Abhängigkeit von Ernetgutparametern und/oder dem Zerkleinerungsgrad des Erntegutes (7) einstellbar sind.

5. Feldhäcksler nach Anspruch 4,
**dadurch gekennzeichnet,**
**dass** der Erntegutparameter die Erntegutart und/oder die Erntegutfeuchte umfasst.

6. Feldhäcksler nach Anspruch 4,
**dadurch gekennzeichnet,**
**dass** der Zerkleinerungsgrad die gewünschte Schnittlänge und/oder die Partikelgröße der Teilchen des Erntegutstromes (7) umfasst.

7. Feldhäcksler nach einem der vorhergehenden Ansprüche,
**dadurch gekennzeichnet,**
**dass** die Konditioniereinrichtung (13) in dem Auswurfkrümmer (15) in Gutftussrichtung (37) zwischen dem Häckselaggregat (10) und einem Nachbeschleunigungsorgan (14) positioniert ist und die Konditionierwalzen (18, 19, 39, 40) in einer Weise zueinander angeordnet sind, dass der fordere Durchgangsspalt (23, 41) in der Gutflussrichtung (37) des in die Konditioniereinrichtung (13) eintretenden Gutstromes (7) liegt und der nachgeordnete Durchgangsspalt (25, 41) so angeordnet ist, dass der aus der Konditioniereinrichtung (13) austretende Gutstrom (7) in Richtung des Eintrittsspaltes (38) des Nachbeschleunigungsorgans (14) abgegeben wird.

8. Feldhäcksler nach Anspruch 7,
**dadurch gekennzeichnet,**
**dass** die Konditioniereinrichtung (13) als Dreiwalzenkonditionierer ausgeführt ist und eine Konditionierwalze (19) unterhalb und die zwei weiteren Konditionierwalzen (17, 18) oberhalb des durch die Durchgangsspalte (23, 25, 41) geförderten Erntegutstromes (7) angeordnet sind,

9. Feldhäcksler nach Anspruch 8,
**dadurch gekennzeichnet,**
**dass** die unterhalb des Erntegutstromes (7) angeordnete Konditionierwalze (19) den größeren Walzendurchmesser (D) aufweist und die oberhalb des Erntegutstromes (7) angeordneten Konditionierwalzen (17, 18) einen gleichen aber kleineren Walzendurchmesser (d) aufweise.

10. Feldhäcksler nach Anspruch 7,
**dadurch gekennzeichnet,**
**dass** die Konditioniereinrichtung (13) paarweise angeordnete Konditionierwalzen (39) umfasst und wobei sich jeweils zwischen den paarweise angeordneten Konditionierwalzen (39) ein Durchgangsspalt (23, 25) ergibt.

11. Feldhäcksler nach Anspruch 7,
**dadurch gekennzeichnet,**
**dass** die Konditioniereinrichtung (13) als Vietwalzenkonditionierer ausgeführt ist und zumindest eine Konditionierwalze (19) unterhalb und die Vielzahl weiterer Konditionierwalzen (40) oberhalb des durch die Durchgangsspalte (41) geförderten Erntegutstromes (7) angeordnet sind.

12. Feldhäcksler nach Anspruch 11,
**dadurch gekennzeichnet,**
**dass** die zumindest eine unterhalb des Erntegutstromes (7) angeordnete Konditionierwalze (19) und die Vielzahl oberhalb des Erntegutstromes (7) angeordneten Konditionierwalzen (40) zwischen sich Durchgangsspalte (41) ausbilden und wobei die Durchgangsspalte (41) eine vom Eintrittsbereich (22) zum Austrittsbereich (24) der Konditioniereinrichtung (13) abnehmende Spaltweite (42) aufweisen.

13. Feldhäcksler nach einem der vorhergehenden Ansprüche,
**dadurch gekennzeichnet,**
**dass** entweder die oberhalb des Gutstromes (7) angeordneten Konditionierwalzen (17, 18, 39, 40) oder die unterhalb des Gutstromes (7) angeordneten Konditionierwalzen (19, 39) oder alle Konditionierwalzen (17-19, 39, 40) in ihrer Position änderbar gelagert sind.

14. Feldhäcksler nach einem der vorhergehenden Ansprüche,
**dadurch gekennzeichnet,**
**dass** die Änderung der Spaltweite (26, 42) des im Eintrittsbereich (22) der Konditioniereinrichtung (13) liegenden Durchgangsspaltes (23, 41) zwecks Einstellung der Grobzerkleinerung vom dem Betreiber des Feldhäckslers (2) vorgenommen wird und die Änderung der Spaltweite (27, 42) des oder der nachgeordneten Durchgangsspalte (25, 41) zwecks Einstellung der Feinzerkleinerung in Abhängigkeit von dem sensierten Zerkleinerungsgrad vom Betreiber oder automatisch vorgenommen wird.

15. Feldhäcksler nach Anspruch 14,
**dadurch gekennzeichnet,**
**dass** der Zerkleinerungsgrad mittels einer Detektionseinrichtung (33) im Auswurfkrümmer (15) ermittelt wird.

## Claims

1. A forage harvester (2) comprising intake members (19) feeding the material to be chopped to a downstream-arranged chopping assembly (10) and a discharge bend pipe (15) arranged downstream of the chopping assembly (10), and a conditioning device (13) which comprises a rotatingly drivable roller arrangement (17-19) and which is arranged between the chopping assembly (10) and the discharge bend pipe (15) and wherein the conditioning rollers (17-19) of the conditioning device (13) provide at least two material through-passage gaps (23, 25, 41),
**characterised in that**
the gap width (26, 27, 42) of the at least two through-passage gaps (23, 25, 41) is adjustable in such a way that the gap width (26, 42) of the through-passage gap (23, 41) arranged in the entry region (22) of the conditioning device (13) is larger than the gap width (27, 42) of a through-passage gap (25, 41) arranged downstream in the material flow direction (37).

2. A forage harvester according to claim 1 **characterised in that** the respective gap width (26, 27, 42) is adjustable in steps or steplessly.

3. A forage harvester according to one of the preceding claims **characterised in that** the gap widths (26, 27, 42) of the upstream-disposed and the downstream-disposed through-passage gap (23, 25, 41) are adjustable in a fixed ratio to each other.

4. A forage harvester according to one of the preceding claims **characterised in that** the gap widths (26, 27, 42) of the through-passage gaps (23, 25, 41) are adjustable in dependence on crop material parameters and/or the degree of comminution of the crop material (7).

5. A forage harvester according to claim 4 **characterised in that** the crop material parameter includes the kind of crop and/or the crop material moisture content.

6. A forage harvester according to claim 4 **characterised in that** the degree of comminution includes the desired cut length and/or the particle size of the particles of the crop material flow (7).

7. A forage harvester according to one of the preceding claims **characterised in that** the conditioning device (13) is positioned in the discharge bend pipe (15) in the material flow direction (37) between the chopping assembly (10) and a post-acceleration member (14) and the conditioning rollers (18, 19, 39, 40) are arranged relative to each other in such a way that the front through-passage gap (23, 41) is in the material flow direction (37) of the flow of material (7) passing into the conditioning device (13) and the downstream-arranged through-passage gap (25, 41) is so arranged that the flow of material (7) issuing from the conditioning device (13) is discharged in the direction of the entry gap (38) of the post-acceleration member (14).

8. A forage harvester according to claim 7 **characterised in that** the conditioning device (13) is in the form of a three-roller conditioner and a conditioning roller (19) is arranged beneath and the two further conditioning rollers (17, 18) are arranged above the flow of crop material (7) conveyed through the through-passage gaps (23, 25, 41).

9. A forage harvester according to claim 8 **characterised in that** the conditioning roller (19) arranged beneath the flow of crop material (7) is of the larger roller diameter and the conditioning rollers (17, 18) arranged above the flow of crop material (7) are of an identical but smaller roller diameter (d).

10. A forage harvester according to claim 7 **characterised in that** the conditioning device (13) includes conditioning rollers (39) arranged in paired relationship and wherein a respective through-passage gap (23, 25) is provided between the conditioning rollers (39) arranged in paired relationship.

11. A forage harvester according to claim 7 **characterised in that** the conditioning device (13) is in the form of a four-roller conditioner and at least one conditioning roller (19) is arranged beneath and the plurality of further conditioning rollers (17, 18) are arranged above the flow of crop material (7) conveyed through the through-passage gaps (41).

12. A forage harvester according to claim 11 **characterised in that** the at least one conditioning roller (19) arranged beneath the flow of crop material (7) and the plurality of conditioning rollers (40) arranged above the flow of crop material (7) form through-passage gaps (41) between them and wherein the through-passage gaps (41) are of a gap width (42) decreasing from the entry region (22) to the exit region (24) of the conditioning device (13).

13. A forage harvester according to one of the preceding claims **characterised in that** either the conditioning rollers (17, 18, 39, 40) arranged above the material flow (7) or the conditioning rollers (19, 39) arranged beneath the material flow (7) or all conditioning rollers (17-19, 39, 40) are mounted variably in their position.

14. A forage harvester according to one of the preceding claims **characterised in that** the variation in the gap width (26, 42) of the through-passage gap (23, 41) which is in the entry region (22) of the conditioning device (13) for the purposes of adjusting coarse comminution is effected by the operator of the forage harvester (2) and the variation in the gap width (27, 42) of the downstream-arranged through-passage gap or gaps (25, 41) for the purposes of adjusting fine comminution is effected by the operator or automatically in dependence on the sensed degree of comminution.

15. A forage harvester according to claim 14 **characterised in that** the degree of comminution is detected by means of a detection device (33) in the discharge bend pipe (15).

## Revendications

1. Ensileuse (2) comprenant des organes d'amenée (9) pour diriger le produit haché vers un organe hacheur (10) disposé en aval et comprenant un coude d'éjection (15) disposé en aval de l'organe hacheur (10) ainsi qu'un dispositif de conditionnement (13), lequel est constitué d'un agencement de rouleaux (17-19) aptes à être entraînés en rotation et est disposé entre l'organe hacheur (10) et le coude d'éjection (15), les rouleaux de conditionnement (17-19) du dispositif de conditionnement (13) formant au moins deux intervalles de passage de produit (23, 25), **caractérisée en ce que** la largeur d'intervalle (26, 27, 42) des intervalles de passage (23, 25, 41) au nombre d'au moins deux est réglable de façon que la largeur d'intervalle (26, 42) de l'intervalle de passage (23, 41) situé dans la zone d'entrée (22) du dispositif de conditionnement (13) soit supérieure à la largeur d'intervalle (27, 42) d'un intervalle de passage (25, 41) disposé en aval dans la direction d'écoulement de produit (37).

2. Ensileuse selon la revendication 1, **caractérisée en ce que** chaque largeur d'intervalle (26, 27, 42) est réglable par crans ou de façon continue.

3. Ensileuse selon une des revendications précédentes, **caractérisée en ce que** les largeurs d'intervalles (26, 27, 42) des intervalles de passage amont et aval (23, 25, 41) sont réglables selon un rapport mutuel fixe.

4. Ensileuse selon une des revendications précédentes, **caractérisée en ce que** les largeurs d'intervalles (26, 27, 42) des intervalles de passage (23, 25, 41) sont réglables en fonction de paramètres de produit récolté et/ou du degré de broyage du produit récolté (7).

5. Ensileuse selon la revendication 4, **caractérisée en ce que** le paramètre de produit récolté comprend la nature du produit récolté et/ou l'humidité du produit récolté.

6. Ensileuse selon la revendication 4, **caractérisée en ce que** le degré de broyage comprend la longueur de coupe souhaitée et/ou la grosseur de particule des fragments du flux de produit récolté (7).

7. Ensileuse selon une des revendications précédentes, **caractérisée en ce que** le dispositif de conditionnement (13) est positionné dans le coude d'éjection (15) dans la direction d'écoulement de produit (37) entre l'organe hacheur (10) et un organe de postaccélération (14), et les rouleaux de conditionnement (18, 19, 39, 40) sont disposés les uns par rapport aux autres de façon que l'intervalle de passage avant (23, 41) se trouve dans la direction d'écoulement de produit (37) du flux de produit (7) pénétrant dans le dispositif de conditionnement (13) et que l'intervalle de passage aval (25, 41) soit disposé de façon que le flux de produit (7) sortant du dispositif de conditionnement (13) soit évacué en direction de l'intervalle d'entrée (38) de l'organe de postaccélération (14).

8. Ensileuse selon la revendication 7, **caractérisée en ce que** le dispositif de conditionnement (13) est conformé en conditionneur à trois rouleaux, et un rouleau de conditionnement (19) est disposé au-dessous du flux de produit récolté (7) traversant les intervalles de passage (23, 25, 41), et les deux autres rouleaux de conditionnement (17, 18) sont disposés au-dessus.

9. Ensileuse selon la revendication 8, **caractérisée en ce que** le rouleau de conditionnement (19) disposé au-dessous du flux de produit récolté (7) présente le plus grand diamètre de rouleau (D), et les rouleaux de conditionnement (17, 18) disposés au-dessus du flux de produit récolté (7) présentent un diamètre de rouleau identique mais inférieur (d).

10. Ensileuse selon la revendication 7, **caractérisée en ce que** le dispositif de conditionnement (13) comprend des rouleaux de conditionnement disposés par paires (39), un intervalle de passage (23, 25) étant ainsi créé entre chacune des paires de rouleaux de conditionnement (39).

11. Ensileuse selon la revendication 7, **caractérisée en ce que** le dispositif de conditionnement (13) est conformé en conditionneur à quatre rouleaux, et au moins un rouleau de conditionnement (19) est disposé au-dessous du flux de produit récolté (7) traversant les intervalles de passage (41), et la pluralité des autres rouleaux de conditionnement (40) est disposée au-dessus.

12. Ensileuse selon la revendication 11, **caractérisée en ce que** le rouleau de conditionnement (19) au nombre d'au moins un disposé au-dessous du flux de produit récolté (7) et la pluralité de rouleaux de conditionnement (40) disposés au-dessus du flux de produit récolté (7) forment entre eux des intervalles de passage (41), et les intervalles de passage (41) présentent une largeur d'intervalle (42) qui diminue de la zone d'entrée (22) vers la zone de sortie (24) du dispositif de conditionnement (13).

13. Ensileuse selon une des revendications précédentes, **caractérisée en ce que** soit les rouleaux de conditionnement (17, 18, 39, 40) disposés au-dessus du flux de produit (7), soit les rouleaux de conditionnement (19, 39) disposés au-dessous du flux de produit (7), soit tous les rouleaux de conditionnement (17-19, 39, 40) sont montés avec la possibilité de changer de position.

14. Ensileuse selon une des revendications précédentes, **caractérisée en ce que** la modification de la largeur d'intervalle (26, 42) de l'intervalle de passage (23, 41) situé dans la zone d'entrée (22) du dispositif de conditionnement (13) dans le but de régler le broyage grossier est réalisée par l'utilisateur de l'ensileuse (2), et la modification de la largeur d'intervalle (27, 42) du ou des intervalles de passage aval (25, 41) dans le but de régler le broyage fin en fonction d'un degré de broyage détecté est réalisée par l'utilisateur ou automatiquement.

15. Ensileuse selon la revendication 14, **caractérisée en ce que** le degré de broyage est déterminé au moyen d'un dispositif de détection (33) implanté dans le coude d'éjection (15).
